# EUROPEAN PATENT SPECIFICATION

(11) **EP 4 272 099 B1**
(45) Date of publication and mention of the grant of the patent: **28.01.2026**
(21) Application number: 21848037.4
(22) Date of filing: 30.12.2021
(51) Int. Cl.: G06F 21/57, H04L 9/40

(54) **COMPUTING PLATFORM FOR THE SECURE EXECUTION OF PENETRATION TESTS AND FOR THE SECURE VALIDATION OF CYBERSECURITY OF COMPUTER RESOURCES OF EMBEDDED SYSTEMS**
RECHENPLATTFORM ZUR SICHEREN DURCHFÜHRUNG VON EINDRINGUNGSTESTS UND ZUR SICHEREN VALIDIERUNG DER CYBERSICHERHEIT VON COMPUTERRESSOURCEN EINGEBETTETER SYSTEME
PLATE-FORME INFORMATIQUE POUR L'EXÉCUTION SÉCURISÉE DE TESTS DE PÉNÉTRATION ET POUR LA VALIDATION SÉCURISÉE DE LA CYBER-SÉCURITÉ DE RESSOURCES INFORMATIQUES DE SYSTÈMES

(30) Priority: 30.12.2020 IT 202000032882; 23.12.2021 IT 202100032468
(43) Date of publication of application: 08.11.2023
(73) Proprietor: Drivesec S.r.l., 10121 Torino (IT)
(72) Inventor: FARANDA CORDELLA, Giuseppe, 10138 Torino (IT)
(74) Representative: Studio Torta S.p.A.
(86) International application number: PCT/IB2021/062463
(87) International publication number: WO 2022/144824

(56) References cited:
- CN-A- 111 901 349
- US-A1- 2019 068 631
- US-A1- 2019 268 369
- US-A1- 2020 265 144

## Description

### Cross-Reference to related Applications

This patent application claims priority from Italian patent applications no. 102020000032882 and no. 102021000032468 filed on filed on December 30, 2020 and December 23, 2021, respectively.

### Technical Sector of the Invention

The present invention generally relates to the field of *cybersecurity,* in particular to the execution of penetration tests and validation of cybersecurity of computer resources of *embedded* systems without Internet connectivity.

The present invention can be applied in any field of application wherein it is necessary to verify the existence of cybersecurity requirements provided for by dedicated regulations or specific product requirements. In particular, the present invention enables to execute remote penetration and validation tests of the cybersecurity of computer resources of *embedded* systems that would not be reachable by means of, for example, the Internet, and to do so while ensuring that the integrity of the tested *embedded* systems is not compromised by remote penetration and validation tests. Furthermore, the present invention allows multiple parties to connect to *embedded* systems simultaneously, ensuring equal sharing of the computing platform resources *(non-starvation*).

Still more in particular, the present invention is advantageously, though not exclusively, applied in the automotive field, on any road vehicle, whether it is used for the transport of people, such as a passenger car, a bus, a camper, etc., or for the transport of goods, such as an industrial vehicle (lorry, truck-trailer, articulated vehicle, etc.) or light or medium-heavy commercial vehicle (van, panel van, chassis-cab, etc.), or for other uses (earth-moving or agricultural machinery, etc.).

The present invention is also applicable to IoT *(Internet of Things)* systems having *embedded* objects therein having connections with other devices and/or indirect connections to the Internet (Wi-Fi, Bluetooth, etc.).

### Prior art

As known, cybersecurity identifies a set of measures designed to protect computer resources, such as systems, networks and computer programs, from various types of computer attacks, such as thefts or damage to hardware and software components and electronic data, as well as the interruption or diversion of services provided by the same computer resources.

With the increasing reliance on IT services, the Internet, physical and *wireless* networks (e.g. Wi-Fi and Bluetooth) for different application areas, as well as the increasingly growing production and use of *smart* devices (such as smartphones, phablets, tablets, smart TVs and IoT, *Internet of Things,* devices), cybersecurity has become increasingly important and still represents, due to its complexity, one of the biggest challenges in today's world.

In particular, a computer vulnerability is a weakness in the design, implementation, operation and/or internal control of a computer resource and can be used to attack the same computer resource; computer vulnerabilities can be researched, identified through *reverse engineering,* traced or exploited using automated tools or customised *scripts .*

Cybersecurity measures aim to identify and prevent the presence of computer vulnerabilities and, therefore, attacks; in particular, attacks to computer resources can be, for example, *backdoor* attacks, *denial-of-service, DoS,* attacks, *direct-access* attacks, *eavesdropping,* multi-vector and polymorphic attacks, *phishing, Privilege escalation* attacks, *reverse engineering* attacks, *social engineering* attacks, *spoofing, tampering* and *malwares.*

The growth in the number and potential of computer resources and the ever-increasing reliance of companies on these tools leads to a consequent increase in the number of companies of different backgrounds in terms of application domain that can be affected by possible cyber-attacks. In other words, the cybersecurity of a company computer resources becomes a fundamental requirement for the management of computer resources of any company in any application domain.

This increasing attention to cybersecurity is particularly perceived in the automotive sector, where, in recent years, there has been an increasing computerisation of vehicles, for example with the introduction of on-board computer resources (e.g. on-board computers) to control the engine, brakes, passive safety systems (airbags and pre-tensioners), *cruise control* management, and *Advanced Driver Assistance Systems* (ADAS) to improve safety and driving comfort. In addition, new-generation vehicles are connected, for example, to remote computer resources (e.g. remote units providing services, information) by means of mobile telephony and wireless connection systems, such as Wi-Fi and Bluetooth, and can communicate with various devices, such as the on board users mobile devices (e.g. the driver's *smartphone )* and the like.

It follows that the security of vehicles from possible cyber-attacks has also become very important in recent years; for example, a USB memory used as an attack vector to bring malicious software on board in order to compromise even permanently the proper functioning of the computer resources on board the vehicle and, possibly, also the devices connected thereto. For example, attacks resulting from accessing the vehicle control network involve that, for example, a hacker can change the path taken by the vehicle and cause it to go off the road; in other words, the cybersecurity of vehicle computer resources is necessary to avoid accidents and situations that are dangerous for the driver and passengers in the vehicle.

In the light of the above-mentioned problems, public authorities in many countries around the world have defined security standards that car manufacturers and suppliers of vehicle components must comply with in order to ensure the protection of vehicle computer resources from cyber-attacks. Examples of such standards and regulations are the following:
- *WP.29 - Harmonization of Vehicle Regulations, Regulations on Cyber Security (R155) and SW update* (R156) of the UNECE;
- *General Safety Regulation* of the European Commission
- *NHTSA Cybersecurity Guidelines, Vehicle to Vehicle communication - Requirements* and *Self Drive Act* of the US *Regulation American Market*;
- *Cybersecurity Act* of the European Union;
- *ISO*/*SAE CD 21434 Road vehicles - Cybersecurity Engineering;* and
- *ISO 24089 Road Vehicles - Software Update Engineering.*

Currently, in order to test and validate the degree of security of a computer resource, reliance is placed on a so-called *penetration test,* i.e. an operative process of analysis and/or evaluation of the security of a computer resource. Specifically, penetration testing consists in searching for and exploiting potential or actual vulnerabilities in a computer resource and that have been previously detected by simulating an external attack, so as to determine whether the computer resource defences are sufficient or whether there are other vulnerabilities that can be exploited. The penetration test allows, at the end of the procedure, to list the defences it has defeated. The aim of the penetration test is therefore to highlight the weaknesses of the computer resource by providing as much information as possible on the vulnerabilities that have allowed unauthorised access, a clear estimate of the defence capabilities and the level of penetration achieved against vulnerabilities internal and external to the computer resource and the physical security of the computer resource itself.

In US Patent Application US 2020/265144 A1, for example, a *one-touch* mobile penetration testing platform is disclosed, wherein a penetration testing device is provided for performing operations such as determining a mode of operation of the penetration testing device between a *headless* mode of operation and a remote mode of operation. In the *headless* mode of operation, operations comprise determining a test script customized for a target application; in response to receiving an instruction to execute a penetration test, executing a script to execute the test on the application; and based on the results of the test and compiling data indicative of security vulnerabilities in the application. In the remote operation mode, operations include establishing a secure connection between the device and a remote computing device; receiving instructions from the remote computing device to perform a remote penetration test on the application; and executing instructions to determine security vulnerabilities in the application; and providing the remote computing device with a collection of security vulnerabilities.

Chinese Patent Application CN 111901349 A, instead, discloses a penetration test based on an on-board CAN bus of a vehicle and relates to the technical field of communications security. In particular, the penetration test comprises the steps of receiving a penetration test instruction for a vehicle to be tested during the vehicle penetration test and determining a test pattern based on the penetration test instruction; executing a penetration test on the vehicle to be tested by means of CAN communication equipment in communication with the vehicle to be tested according to the test pattern to obtain CAN bus test data; and processing the CAN bus test data according to the test pattern to obtain a penetration test result.

US Patent Application US 2019/268369 A1, instead, discloses the selection between a real attack and a simulation/assessment for validating a vulnerability of a network node during the execution of a penetration test campaign. In some embodiments, both active and passive validation methods are used during a single penetration test campaign in a single networked system. In other embodiments, a first penetration test campaign uses only active validation and a second penetration campaign uses only passive validation, where both campaigns are executed by a single penetration test in a single networked system. The node-by-node determination of the use of active or passive validation may be based on the expected magnitude and/or probability of damage resulting from actually compromising a network node using active validation.

US Patent Application US 2019/068631 A1 finally discloses pre-defined *time-tagged* penetration test scenarios for discovering and reporting security vulnerabilities in a *networked* system. Penetration test campaigns are executed on the basis of predefined penetration test scenarios associated with respective time *tags.* A penetration test scenario is selected by a user from a set of predefined penetration test scenarios containing only predefined penetration test scenarios with time tags corresponding to a planned start time of a penetration test campaign.

### Object and Summary of the Invention

The present invention is defined in the independent claims. Preferred embodiments are defined in the dependent claims.

The Applicant has observed that the methodology based on penetration testing, which allows testing and evaluating the security of a computer resource, has some limitations. As a matter of fact, the penetration test is performed at the end of a development cycle, i.e. when it is too late to effectively assess the presence of vulnerabilities in the computer resource; this implies both longer waiting times (related to waiting for the end of the development cycle and the need to solve vulnerabilities once the development cycle is complete, which may take a not negligible amount of time) and higher costs (related to paying people and resources acting to solve vulnerabilities). The quality of the penetration test therefore depends on the time, the experience of the performer and the cost invested in its execution. In addition, the methodology based on the penetration test has further disadvantages: lack of the possibility to track the operations executed and, therefore, of being able to assess the quality and depth of the penetration test; lack of the possibility of being able to designate a user to perform the penetration test, i.e. a *trusted* user; and lack of the possibility of sharing the computer resources to be tested among several users in order to optimise the penetration test and increase the chances of finding vulnerabilities.

In addition, the quality and result of the research produced by the penetration test also depend on who performs it, i.e. a qualified expert. This requirement, however, is incompatible with the growing demand for integration and use of computer resources, since the need to meet increasingly stringent computer security requirements requires a greater availability, in terms of numbers and time, of qualified experts; therefore, the availability of qualified experts for testing and validating computer resources would be critical.

These problems are even more evident and important in the automotive sector, especially in the light of the introduction of new regulations. The introduction of increasingly stringent standards for the security management of computer resources in new-generation vehicles means that there is a greater demand for penetration tests and security validations and, therefore, a greater demand for qualified experts who can guarantee the security of the vehicle computer resources. In particular, such certifications will be required mainly by vehicle manufacturers and their main OEM *(Original Equipment Manufacturer)* suppliers, as well as by component suppliers *(Tier 1). Certification Authorities* will also have to be provided with the necessary skills to be able to properly carry out certification activities.

In addition to the problems listed above, in the automotive sector, a major limitation to the process of testing and validating the vehicle computer resources and components is the accessibility to computer resources themselves, since a component or a device (or the vehicle itself), in order to be tested and validated from an IT perspective, must be physically accessible to the expert (here, a cybersecurity technician).

There are, therefore, problems in terms of time, costs and complexity in executing the procedures for testing and validating computer resources that represent a considerable commitment for companies, both in terms of cost and time, to ensure the deployment of advanced technologies, particularly in the automotive sector.

The Applicant has observed that the current methods for detecting potential attacks and for verifying the cybersecurity measures of computer resources, particularly in the automotive sector, although beneficial, have room for improvement.

For this reason, there is a need to provide a system for testing and verifying the security of computer resources, in order to solve, rapidly and cost-effectively, any vulnerabilities in the security of the computer resource.

Aim of the present invention is thus to make available a system for allowing penetration/validation testers to execute penetration tests on, and validate the cybersecurity of, computer resources of local *embedded* systems without Internet connectivity to be tested that overcomes the drawbacks of the prior art.

According to the present invention, systems are made available to allow penetration/validation testers to execute penetration tests on, and validate the computer security of, computer resources of local *embedded* systems without Internet connectivity to be tested and related software modules, as claimed in the appended Claims.

### Brief Description of the Drawings

Figure 1 schematically shows a system to allow penetration/validation testers to execute penetration tests on, and validate the cybersecurity of, computer resources of local *embedded* systems without Internet connectivity to be tested.

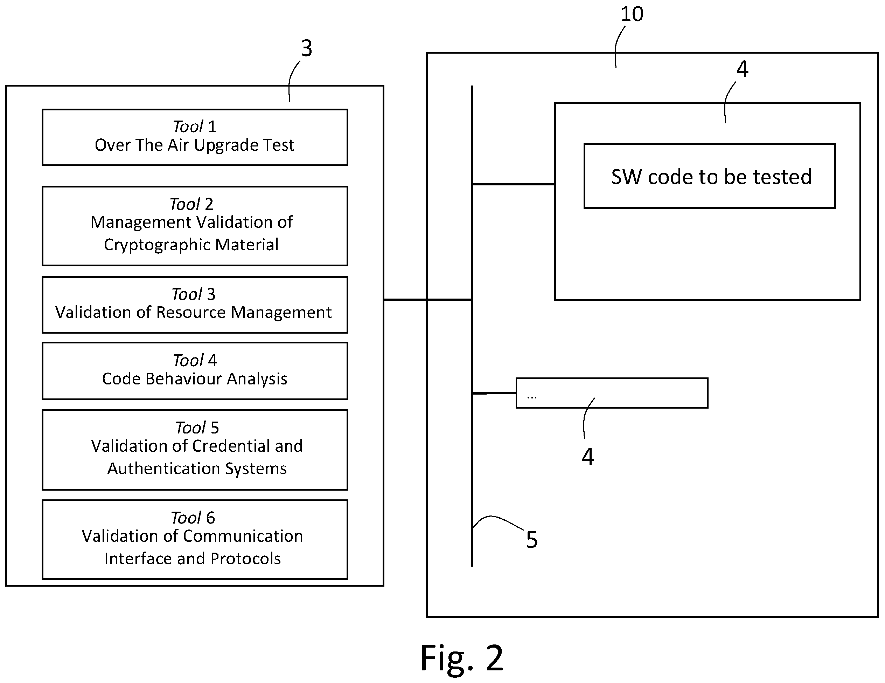

Figure 2 schematically shows a local electronic connectivity and processing unit that is part of the system of Figure 1.

### Detailed Description of Preferred Embodiments of the Invention

The present invention will now be described in detail with reference to the accompanying figures to allow a skilled person to make and use it. Various modifications of the embodiment described will be immediately clear to the skilled person and the general principles disclosed can be applied to other embodiments and applications without departing from the protection scope of the present invention, as defined in the enclosed claims. Therefore, the present invention shall not be limited to the illustrated and described embodiments, but it must be granted the widest protection scope in accordance with the features disclosed and claimed.

Unless otherwise defined, all the herein used technical and scientific terms have the same meaning commonly used by the ordinary skilled in the art of the present invention. In case of conflict, the present invention, including definitions provided, will be binding. Furthermore, the examples are provided for merely illustrative purposes and must not be regarded as limiting.

In particular, the block diagrams included in the enclosed figures and hereinafter described must not be considered as a representation of the structural features, i.e. construction limitations, but must be construed as a representation of functional features, namely inner properties of the devices and defined by the obtained effects i.e. functional limitations which can be implemented in different ways, so as to protect the functionality thereof (chance of functioning).

In order to ease the understanding of the herein described embodiments, reference will be made to some specific embodiments and a specific language will be used to describe them. The terminology used in the present document aims at describing only particular embodiments, and is not intended to limit the scope of the present invention.

Assuming that hackers may use the vulnerabilities of a computer system or network at any time within the *service chain,* there is an ongoing process to test and validate the security measures of computer resources. In particular, the aim of continuous cybersecurity testing is to identify and solve any vulnerabilities already in the process of developing computer resources; therefore, the security measures of computer resources are tested and validated also during the development thereof, so that vulnerabilities are solved as early as possible.

In more detail, the ongoing computer security testing allows a possible attack vector to be identified by means of a verification and validation computer *tool* programmed to:
- anticipate possible results of a subsequent penetration test;
- verify the implementation of security measures for the communication and data integrity of the computer resource being examined; and
- generate *reports* that can be used for certification purposes of the computer resource being examined.

The present invention allows, as further described below, one or more identified and authorised testers to remotely access, without interruption and securely, *bench tests* of components/systems and individual *embedded* systems or networks of automotive *embedded* systems. Thus, a software engineer specialised in cybersecurity is able to remotely test the components or devices of the vehicle by means of an *Internet-based interface,* which makes it possible to reconstruct the situation wherein the same engineer is physically on the vehicle (or at the test bench) and is testing the components or devices on site (remotization). In other words, it is possible to circumvent the need to access physically to components or devices and, therefore, to execute remote testing and validation.

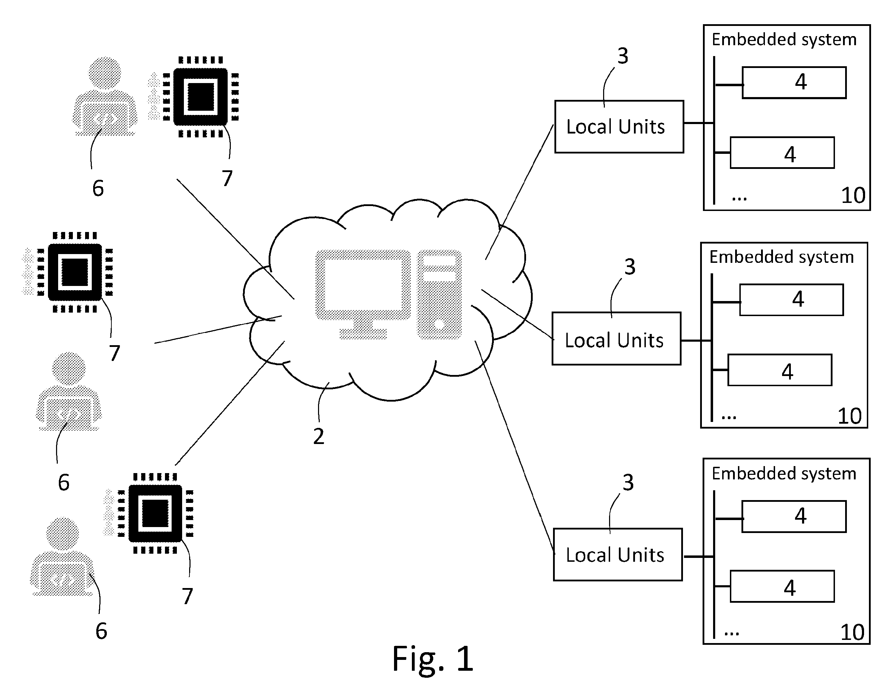

Figure 1 shows a system **1** for allowing a penetration/validation tester **6, 7** to execute penetration tests on, and validate the cybersecurity of, computer resources **4** of local *embedded* systems **10** without Internet connectivity to be tested.

In particular, the system **1** comprises:
- one or more local electronic connectivity and processing units **3** each designed to be connectable to one or more local *embedded* systems **10** to be tested and to provide Internet connectivity to the local *embedded* systems **10** to be tested to which it is connected; and
- a remote computing platform **2** designed to communicate with the local electronic connectivity and processing units **3** and to allow access to the remote computing platform **2** to penetration/validation testers **6, 7** authorized to access local *embedded* systems **10** to be tested to allow penetration/validation testers **6, 7** to execute penetration tests on, and validate the cybersecurity of, the computer resources **4** of the local *embedded* systems **10** to be tested.

In particular, in Figure 1 a remote computing platform **2** designed to interface, on the one hand, with a plurality of penetration/validation testers **6, 7** and, on the other hand, with a plurality of local electronic communication and processing units **3,** each of which may in turn be connected to one or a plurality of *embedded* systems **10** to be tested, each of which may have one or a plurality of computer resources **4** on which to perform penetration and cybersecurity validation tests, is shown.

The remote computing platform **2** and the local electronic connectivity and processing units **3** are designed to:
- locate, i.e., making local, the penetration/validation testers **6, 7,** which are allowed to access the local *embedded* systems **10** so that they can operate on the computer resources **4** of the local embedded systems **10** as if the penetration/validation testers **6, 7,** were physically present at the locations of the local *embedded* systems**10;** and
- remotize the local *embedded* systems **10** by making their computer resources **4** virtual so as to allow penetration/validation testers **6, 7** to perform penetration and cybersecurity validation tests directly on the computer resources **4** of the local *embedded* systems**10.**

The remote computing platform **2** and the local electronic connectivity and processing units **3** therefore act as mediators between the penetration/validation testers **6, 7** and the local *embedded* systems **10** to be tested, thus ensuring security, *multiplexing* and *reporting.*

As shown in Figure 1, the penetration/validation testers **6, 7** can be either individual users **6,** as so-called *white hat hackers,* or *bug bounty* platforms **7** to which individual users **6** can connect and the remote computing platform **2** is designed to perform the tracking of all connections and all activities related to the penetration/validation testers **6, 7** connected thereto so as to be able to create more complete reports either for a client and for a certification body that will have to assess quality and consistency thereof.

It should be noted that, in the case of a remote testing process with remotization and virtualization of the local *embedded* systems **10** to be tested, the individual users **6,** provided with respective terminals for access, and/or the *bug bounty* platform7 are able to access the computer resources **4** thanks to the virtualization of the latter on the terminals of the individual users **6** and/or on the *bug bounty* platform7; in particular, in the case of the *bug bounty* platform7, each connected user is able to access separately and independently from the others the computer resources **4** in order to perform tests on the latter.

In order to perform its assigned function, a local electronic communication and processing unit **3** is designed to:
- store and execute one or more *embedded* computer instruments or *tools* designed to execute respective automatic penetration tests on, and validate the cybersecurity of, the computer resources **4** of the local *embedded* systems **10** to be tested connected to the local electronic connectivity and processing unit **3;** and
- communicate with the remote computing platform **2** to allow penetration/validation testers **6, 7** authorized to access the local *embedded* systems **10** to be tested connected to the local electronic connectivity and processing unit **3** to execute penetration tests on, and remotely validate the cybersecurity of, the computer resources **4** of the local *embedded* systems **10** to be tested.

By way of a non-limiting example, the *embedded* computer tools might comprise one or more of the following:
- *Tool* 1*:* testing *over-the-air* updates of the *features* of a computer resource;
- *Tool* 2: validation of the cryptographic material management;
- *Tool* 3: validation of resource management;
- *Tool* 4: analysis of software code behaviour in a computer resource **4;**
- *Tool* 5: validation of credential and authentication systems; and
- *Tool* 6: validation of communication interfaces and protocols.

This means that if one of the computer resources **4** implements, for example, an *over the air* update of *a feature,* the *Tool* 1 of the local electronic communication and processing unit **3** will perform a set of tests to validate the correct implementation of the *feature* following the update. Similarly, the other computing tools residing in the local electronic communication and processing unit **3** will also execute tests to check the correctness, especially in terms of security, of the software codes of the computer resource **4.**

The remote computing platform **2** is also designed to:
- establish and manage secure connections between the local electronic connectivity and processing units **3** and penetration/validation testers **6, 7** authorized to access the local *embedded* systems **10** to be tested connected to the local electronic connectivity and processing units **3** to allow penetration/validation testers **6, 7** to perform penetration tests on, and remotely validate the cybersecurity of the computer resources **4** of the local *embedded* systems **10** to be tested, both through the *embedded* computing tools stored in the local electronic connectivity and processing units **3** and through proprietary computing tools of penetration testers **6, 7;**
- manage *multiplexing* between penetration/validation testers **6, 7** and local electronic connectivity and processing units **3,** to deal with security and *timing* conflicts by ensuring equal access to all penetration/validation tests **6, 7** *(non-starvation);* and

To this end, the remote computing platform **2** is also designed to:
- allow penetration/validation testers **6, 7** to request the assignment of time intervals *(time slots)* for executing penetration tests on, and validating the cybersecurity of, local computer resources **4** of *embedded* local systems **10** to be tested to which the penetration/validation testers **6, 7** are authorized to have access;
- assign to the penetration/validation testers **6, 7** one or more time intervals in which to execute penetration tests on, and validate the cybersecurity of, local computer resources **4** of local *embedded* systems **10** to be tested; and
- establish secure connections between the remote computing platform **2** and the local electronic connectivity and processing units **3** in the time intervals assigned to the penetration/validation testers **6, 7** to allow the penetration/validation testers **6, 7** to perform penetration tests on, and remotely validate the cybersecurity of the computer resources **4,** of the local *embedded* systems **10** to be tested connected to the local electronic connectivity and processing units **3** connected to the remote computing platform **2.**

In addition, the remote computing platform **2** is designed to virtualise local *embedded* systems in order to make the relative computer resources **4** available to penetration/validation testers **6, 7** so that they can perform penetration tests on them or can validate the cybersecurity thereof.

The remote computing platform **2** is also designed to allow one or more of the following functionalities to be implemented:
- monitoring the activity of the local electronic connectivity and processing units **3** and of the remote computing platform **2;**
- recording penetration and cybersecurity validation test sessions; and
- generating reports of the activity of the local electronic connectivity and processing units 3 and of the remote computing platform **2.**

The local electronic connectivity and processing units **3** are also designed to:
- receive from the remote computing platform **2** and store the time intervals in which to connect to the remote computing platform **2;** and
- autonomously connect to the remote computing platform **2** in the stored time intervals.

The local electronic connectivity and processing units **3** are also designed to allow one or more of the following functionalities to be implemented:
- updating the *embedded* computing tools if a new type of vulnerability or attack methodology is found; and
- provide specifications, requirements and information on the types of vulnerabilities.

The electronic communication and processing units **3** are also designed to record and replicate a test and validation operation or a sequence of test and validation operations in order to execute them autonomously on the computing resources **4** of the local *embedded* systems **10.**

In a preferred embodiment, the local *embedded* systems **10** to be tested comprise an in-vehicle system or a *in-vehicle network* connected to an in-vehicle communication network.

In this embodiment, the electronic communication and processing units **3** are designed to allow one or more of the following functionalities to be implemented:
- communicating with interfaces of local *embedded* systems **10,** in particular with interfaces and/or devices thereof (such as, for example, CAN interfaces, Ethernet, Flexray, Wi-Fi, BT, NFC, etc.); and
- generating activity reports of the electronic communication and processing units **3.**

The electronic communication and processing units **3** are further designed to provide serial interfaces designed to allow communication between the electronic communication and processing units **3** and the computer resources **4** of the local *embedded* systems**10** via the remote computing platform **2.** This also allows to execute deeper test attacks, in order to verify in more detail the security level of a computer resource.

Although the automotive sector is one of the most promising application areas for the system **1** according to the present invention, it is clearly not the only one, and further application areas could, for example, comprise the manufacturing or medical sectors for testing and validating IoT-type devices.

Based on what has been described, the advantages which the present invention allows to be obtained are clear.

In particular, the present invention may be used as a certification tool for automatically or manually verifying the implementation of computer security measures on computer resources, for example on-board a vehicle. In this case, it is possible to exploit modules to verify these requirements, e.g. modules to verify ISO 21434.

In addition, the automatic generation of reports by the remote computing platform **2** allows to certify security verification activities of computer resources **4** of local *embedded* systems **10.**

In addition, the present invention allows to establish secure and shared connections between local electronic connectivity and processing units **3** in charge of one or more individual users **6** or connected through platforms such as *bug bounty* platforms**7** that have been previously identified and authorised.

In addition, the remote computing platform **2** allows to efficiently manage the security and *non-starvation* of this system **1** for executing penetration tests and validating the cybersecurity of hardware/software computer resources **4.**

In addition, the present invention ensures traceability of the operations executed by the penetration/validation testers and thus their replicability.

Furthermore, the present invention enables to implement either a remote penetration test locally, i.e., by "locating" the testers in the environment of the computer resources to be tested, and a penetration test in which a virtual remote interface of the computer resource environment is established, i.e., by "remotizing" the computer resources for the user. For example, the present invention allows to execute penetration tests involving remotization of information circulating, for example, on CAN networks of a vehicle and on local electronic connectivity and processing units relating to the same penetration test.

It derives that the process of testing and verifying the requested safety requirements, especially in the automotive sector, is simplified and less time-consuming thanks to the presence of the remote computing platform, which acts as a bridge between a computer resource and the person performing the verification, as well as any other external platforms that may further verify the validity of the security verifications carried out.

The ability of cybersecurity experts to operate remotely on a variety of systems makes the use of these resources much more efficient, thus reducing the time and costs of such operations.

The platform also allows to remotely develop the software of *embedded* systems, thus allowing a remotization of software development engineers, with associated benefits in terms of time and costs.

All this while maintaining, thanks to the platform security features, the same level of guarantees (confidentiality, integrity, etc.) that are possible with on-site development and testing, i.e. within the company, in specific laboratories. These will always contain the systems under development and testing. but technicians can operate remotely.

Remotization will also make it possible to have "mobile" laboratories, i.e. linking systems under development and testing on board-vehicles. This is particularly important in the final step of development of vehicle-borne systems, where testing is required under real-life conditions. In this case as well with obvious benefits in terms of cost and time.

Finally, the deployment of driver assistance and autonomous driving systems will require a large number of tests to be carried out on the road, in different and distant locations, so the possibility of developing and executing penetration tests directly on the vehicles, always in a safe manner, results in further clear advantages in terms of time and cost.

## Claims

1. A system **(1)** for allowing a penetration/validation tester **(6, 7)** to execute penetration tests on, and validate cybersecurity of, computer resources **(4)** of local *embedded* systems without Internet connectivity to be tested;
the system **(1)** comprising:
- one or more local electronic connectivity and processing units **(3)** each designed to be connectable to one or more local *embedded* systems to be tested and to provide Internet connectivity to the local *embedded* systems to be tested to which it is connected; and
- a remote computing platform **(2)** designed to communicate with the local electronic connectivity and processing units **(3)** and to allow access to the remote computing platform **(2)** to penetration/validation testers **(6, 7)** authorized to access local *embedded* systems to be tested to allow penetration/validation testers **(6, 7)** to execute penetration tests on, and validate the cybersecurity of, the computer resources **(4)** of the local *embedded* systems to be tested;
a local electronic connectivity and processing unit **(3)** is designed to:
- store and execute one or more *embedded* computer tools designed to execute respective automatic penetration tests on, and validate the cybersecurity of, the computer resources **(4)** of the local *embedded* systems to be tested connected to the local electronic connectivity and processing unit **(3);** and
- communicate with the remote computing platform **(2)** to allow penetration/validation testers **(6, 7)** authorized to access the local *embedded* systems to be tested connected to the local electronic connectivity and processing unit **(3)** to execute penetration tests on, and remotely validate the cybersecurity of, the computer resources **(4)** of the local *embedded* systems to be tested;
the remote computing platform **(2)** is also designed to:
- establish and manage secure connections between the local electronic connectivity and processing units **(3)** and penetration/validation testers **(6, 7)** authorized to access the local *embedded* systems to be tested connected to the local electronic connectivity and processing units **(3)** to allow penetration/validation testers **(6, 7)** to perform penetration tests on, and remotely validate the cybersecurity of the computer resources **(4)** of the local *embedded* systems to be tested, both through embedded computing tools stored in the local connectivity and processing electronic units **(3)** and through proprietary computing tools of penetration testers **(6, 7), characterised in that** the remote computer platform **(2)** is further designed to:
- allow penetration/validation testers **(6, 7)** to request the assignment of time intervals for executing penetration tests on, and validating the cybersecurity of, local computer resources **(4)** of *embedded* local systems to be tested to which the penetration/validation testers **(6, 7)** are authorized to have access;
- assign to the penetration/validation testers **(6, 7)** one or more time intervals in which to execute penetration tests on, and validate the cybersecurity of, local computer resources **(4)** of local *embedded* systems **(10)** to be tested; and
- establish secure connections between the remote computing platform **(2)** and the local electronic connectivity and processing units **(3)** in the time intervals assigned to the penetration/validation testers **(6, 7)** to allow the penetration/validation testers **(6, 7)** to perform penetration tests on, and remotely validate the cybersecurity of the computer resources **(4),** of the local *embedded* systems to be tested connected to the local electronic connectivity and processing units **(3)** connected to the remote computing platform **(2).**

2. The system **(1)** according to claim **1,** wherein the local electronic connectivity and processing units **(3)** are also designed to:
- receive from the remote computing platform **(2)** and store the time intervals in which to connect to the remote computing platform **(2);** and
- autonomously connect to the remote computing platform **(2)** in the stored time intervals.

3. The system **(1)** according to any of the preceding claims, where the remote computing platform **(2)** is designed to manage multiplexing between the penetration/validation testers **(6, 7)** and the local electronic connectivity and processing units **(3),** to deal with the security and conflict management of timing ensuring equal access to all penetration/validation tests **(6, 7).**

4. The system **(1)** according to any of the preceding claims, wherein the remote computing platform **(2)** is also designed to virtualize the local *embedded* systems to be tested in order to make the related computer resources **(4)** on which to execute the penetration or cybersecurity validation tests available to the penetration/validation testers **(6, 7).**

5. The system **(1)** according to any of the preceding claims, in which the remote computing platform **(2)** is also designed to allow the implementation of one or more of the following features:
- monitoring activity of the local electronic connectivity and processing units **(3)** and of the remote computer platform **(2);**
- recording penetration and cybersecurity validation test sessions; and
- generating reports of the activity of the local electronic connectivity and processing units **(3)** and of the remote computer platform **(2).**

6. The system **(1)** according to any of the preceding claims, wherein the penetration/validation testers **(6, 7)** are single users **(6)** or *bug bounty* platforms **(7)** to which single users are connected **(6).**

7. The system **(1)** according to any of the preceding claims, wherein the local electronic connectivity and processing units **(3)** are also designed to allow the implementation of one or more of the following functions:
- updating the embedded computing tools if a new type of vulnerability or attack methodology is found; and
- provide specifications, requirements and information on types of vulnerabilities.

8. The system **(1)** according to any of the preceding claims, wherein the local *embedded* systems **(10)** to be tested comprise an on-board motor vehicle system or a network of on-board motor vehicle systems connected to an on-board motor vehicle communication network.

9. Software modules for a remote computing platform (2) and a local electronic connectivity and processing unit (3) designed to ensure that, when executed, the remote computing platform (2) and the local electronic connectivity and processing unit (3) cooperate to implement a system (1) to allow penetration/validation testers (6, 7) to perform penetration tests on, and validate cybersecurity of, computer resources (4) of local *embedded* systems without Internet connectivity to be tested according to any one of the preceding claims.

## Patentansprüche

1. System **(1),** das es einem Penetrations-/Validierungstester **(6, 7)** ermöglicht, Penetrationstests auf Computerressourcen **(4)** von zu testenden lokalen *eingebetteten* Systemen ohne Internetkonnektivität durchzuführen und deren Cybersicherheit zu validieren;
wobei das System **(1)** Folgendes umfasst:
- eine oder mehrere lokale elektronische Konnektivitäts- und Verarbeitungseinheiten **(3),** die jeweils so ausgelegt sind, dass sie mit einem oder mehreren zu testenden lokalen *eingebetteten* Systemen verbunden werden können und Internetkonnektivität an die zu testenden lokalen *eingebetteten* Systeme bereitstellen, mit denen sie verbunden ist; und
- eine Remote- Computing-Plattform **(2),** die dazu ausgelegt ist, mit den lokalen elektronischen Konnektivitäts- und Verarbeitungseinheiten **(3)** zu kommunizieren und Penetrations-/Validierungstestern **(6, 7),** die berechtigt sind, auf zu testende lokale *eingebettete* Systeme zuzugreifen, den Zugriff auf die Remote-Computing-Plattform **(2)** zu ermöglichen, um Penetrations-/Validierungstestern **(6, 7)** zu ermöglichen, Penetrationstests auf die Computerressourcen **(4)** der zu testenden lokalen *eingebetteten* Systeme durchzuführen und deren Cybersicherheit zu validieren;
eine lokale elektronische Konnektivitäts- und Verarbeitungseinheit **(3)** ist zu Folgendem ausgelegt:
- Speichern und Ausführen eines oder mehrerer *eingebetteter* Computerwerkzeuge, die ausgelegt sind, um jeweilige automatische Penetrationstests auf die Computerressourcen **(4)** der zu testenden lokalen *eingebetteten* Systeme, die mit der lokalen elektronischen Konnektivitäts- und Verarbeitungseinheit **(3)** verbunden sind, durchzuführen und deren Cybersicherheit zu validieren; und
- Kommunizieren mit der Remote-Computing-Plattform **(2),** um Penetrations-/Validierungstestern **(6, 7),** die berechtigt sind, auf die zu testenden lokalen *eingebetteten* Systeme zuzugreifen, die mit der lokalen elektronischen Konnektivitäts- und Verarbeitungseinheit **(3)** verbunden sind, Penetrationstests auf die Computerressourcen **(4)** der zu testenden lokalen *eingebetteten* Systeme durchführen und deren Cybersicherheit aus der Ferne zu validieren;
die Remote-Computing-Plattform **(2)** ist auch zu Folgendem ausgelegt:
- Aufbauen und Verwalten sicherer Verbindungen zwischen den lokalen elektronischen Konnektivitäts- und Verarbeitungseinheiten **(3)** und Penetrations-/Validierungstestern **(6, 7),** die berechtigt sind, auf die zu testenden lokalen *eingebetteten* Systeme zuzugreifen, die mit den lokalen elektronischen Konnektivitäts- und Verarbeitungseinheiten **(3)** verbunden sind, um Penetrations-/Validierungstestern **(6, 7)** zu ermöglichen, Penetrationstests auf die Computerressourcen **(4)** der zu testenden lokalen *eingebetteten* Systeme durchführen und deren Cybersicherheit sowohl durch eingebettete Computing-Werkzeuge, die in den lokalen Konnektivitäts- und Verarbeitungselektronikeinheiten **(3)** gespeichert sind, als auch durch proprietäre Computing-Werkzeuge von Penetrationstestern **(6, 7),** aus der Ferne zu validieren, **dadurch gekennzeichnet, dass** die Remote-Computerplattform **(2)** ferner zu Folgendem ausgelegt ist:
- Erlauben zu Penetrations-/Validierungstestern **(6, 7),** die Zuweisung von Zeitintervallen für die Durchführung von Penetrationstests auf lokale Computerressourcen **(4)** von zu testenden lokalen *eingebetteten* Systemen und die Validierung deren Cybersicherheit anzufordern, zu denen die Penetrations-/Validierungstester **(6, 7)** berechtigt sind, Zugriff zu haben;
- Zuweisen zu den Penetrations-/Validierungstestern **(6, 7)** von einem oder mehreren Zeitintervallen, in denen Penetrationstests auf lokale Computerressourcen **(4)** von zu testenden lokalen *eingebetteten* Systemen **(10)** durchzuführen und deren Cybersicherheit zu validieren sind; und
- Herstellen von sicheren Verbindungen zwischen der Remote-Computing-Plattform **(2)** und den lokalen elektronischen Konnektivitäts- und Verarbeitungseinheiten **(3)** in den den Penetrations-/Validierungstestern **(6, 7)** zugewiesenen Zeitintervallen, um den Penetrations-/Validierungstestern **(6, 7)** zu ermöglichen, Penetrationstests auf die Computerressourcen **(4)** der zu testenden lokalen *eingebetteten* Systeme, die mit den lokalen elektronischen Konnektivitäts- und Verarbeitungseinheiten **(3)** verbunden sind, die mit der Remote-Computing-Plattform **(2)** verbunden sind, durchzuführen und deren Cybersicherheit aus der Ferne zu validieren.

2. System **(1)** nach Anspruch **1,** wobei die lokalen elektronischen Konnektivitäts- und Verarbeitungseinheiten **(3)** auch zu Folgendem ausgelegt sind:
- Empfangen von Zeitintervallen von der Remote-Computing-Plattform **(2)** und deren Speichern, in denen eine Verbindung zur Remote-Computing-Plattform **(2)** herzustellen ist; und
- autonomes Verbinden mit der Remote-Computing-Plattform **(2)** in den gespeicherten Zeitintervallen.

3. System **(1)** nach einem der vorhergehenden Ansprüche, wobei die Remote-Computing-Plattform **(2)** dazu ausgelegt ist, das Multiplexing zwischen den Penetrations-/Validierungstestern **(6, 7)** und den lokalen elektronischen Konnektivitäts- und Verarbeitungseinheiten **(3)** zu verwalten, um das Sicherheits- und Konfliktmanagement der Zeitsteuerung zu bewältigen und einen gleichberechtigten Zugriff auf alle Penetrations-/Validierungstests **(6, 7)** zu gewährleisten.

4. System **(1)** nach einem der vorhergehenden Ansprüche, wobei die Remote-Computing-Plattform **(2)** auch dazu ausgelegt ist, die zu testenden lokalen *eingebetteten* Systeme zu virtualisieren, um die zugehörigen Computerressourcen **(4),** auf die die Penetrations- oder Cybersicherheitsvalidierungstests durchgeführt werden sollen, den Penetrations-/Validierungstestern **(6, 7)** zur Verfügung zu stellen.

5. System **(1)** nach einem der vorhergehenden Ansprüche, wobei die Remote-Computing-Plattform **(2)** auch dazu ausgelegt ist, die Implementierung eines oder mehrerer der folgenden Merkmale zu ermöglichen:
- Überwachen der Aktivität der lokalen elektronischen Konnektivitäts- und Verarbeitungseinheiten **(3)** und der Remote-Computerplattform **(2);**
- Aufzeichnen von Penetrations- und Cybersicherheitsvalidierungstestsitzungen; und
- Erstellen von Berichten über die Aktivität der lokalen elektronischen Konnektivitäts- und Verarbeitungseinheiten **(3)** und der Remote-Computerplattform **(2).**

6. System **(1)** nach einem der vorhergehenden Ansprüche, wobei die Penetrations-/Validierungstester (**6**, **7**) Einzelbenutzer (**6**) oder Bug-Bounty-Plattformen (**7**) sind, mit denen Einzelbenutzer verbunden sind (**6**).

7. System **(1)** nach einem der vorhergehenden Ansprüche, wobei die lokalen elektronischen Konnektivitäts- und Verarbeitungseinheiten **(3)** auch dazu ausgelegt sind, die Implementierung einer oder mehrerer der folgenden Funktionen zu ermöglichen:
- Aktualisieren der eingebetteten Computing-Werkzeuge, wenn eine neue Art von Schwachstelle oder Angriffsmethodik gefunden wird; und
- Bereitstellen von Spezifikationen, Anforderungen und Informationen zu Arten von Schwachstellen.

8. System **(1)** nach einem der vorhergehenden Ansprüche, wobei die zu testenden lokalen *eingebetteten* Systeme **(10)** ein bordeigenes Kraftfahrzeugsystem oder ein Netzwerk von bordeigenen Kraftfahrzeugsystemen umfassen, die mit einem bordeigenen Kraftfahrzeugkommunikationsnetzwerk verbunden sind.

9. Softwaremodule für eine Remote-Computing-Plattform **(2)** und eine lokale elektronische Konnektivitäts- und Verarbeitungseinheit **(3),** die so ausgelegt sind, dass sie sicherstellen, dass bei Ausführung die Remote-Computing-Plattform **(2)** und die lokale elektronische Konnektivitäts- und Verarbeitungseinheit **(3)** zusammenarbeiten, um ein System **(1)** zu implementieren, das es Penetrations-/Validierungstestern **(6, 7)** ermöglicht, Penetrationstests auf Computerressourcen **(4)** von zu testenden lokalen *eingebetteten* Systemen ohne Internetkonnektivität durchzuführen und deren Cybersicherheit gemäß einem der vorhergehenden Ansprüche zu validieren.

## Revendications

1. Système **(1)** permettant à un testeur de pénétration/validation **(6, 7)** d'exécuter des tests de pénétration sur des ressources informatiques **(4)** et de valider la cybersécurité desdites ressources informatiques de systèmes locaux *embarqués* sans connectivité Internet à tester ;
le système **(1)** comprenant :
- une ou plusieurs unités locales de connectivité et de traitement électronique **(3),** chacune étant conçue pour être connectée à un ou plusieurs systèmes locaux *embarqués* à tester et pour fournir une connectivité Internet aux systèmes locaux *embarqués* à tester auxquels elle est connectée ; et
- une plate-forme informatique distante **(2)** conçue pour communiquer avec les unités locales de connectivité et de traitement électronique **(3)** et pour permettre l'accès à la plate-forme informatique distante **(2)** aux testeurs de pénétration/validation **(6, 7)** autorisés à accéder aux systèmes locaux *embarqués* à tester pour permettre aux testeurs de pénétration/validation **(6, 7)** d'exécuter des tests de pénétration sur les ressources informatiques **(4)** et de valider la cybersécurité de ces ressources informatiques des systèmes locaux *embarqués* à tester ;
une unité locale de connectivité et de traitement électronique **(3)** est conçue pour :
- stocker et exécuter un ou plusieurs outils informatiques *embarqués* conçus pour exécuter des tests de pénétration automatiques respectifs sur les ressources informatiques **(4)** et valider la cybersécurité de ces ressources informatiques des systèmes locaux *embarqués* à tester connectés à l'unité locale de connectivité et de traitement électronique **(3)** ; et
- communiquer avec la plate-forme informatique distante **(2)** pour permettre aux testeurs de pénétration/validation **(6, 7),** autorisés à accéder aux systèmes locaux *embarqués* à tester connectés à l'unité locale de connectivité et de traitement électronique **(3),** d'exécuter des tests de pénétration sur les ressources informatiques **(4)** et de valider à distance la cybersécurité de ces ressources informatiques des systèmes locaux *embarqués* à tester;
la plate-forme informatique distante **(2)** est également conçue pour :
- établir et gérer des connexions sécurisées entre les unités locales de connectivité et de traitement électronique **(3)** et les testeurs de pénétration/validation **(6, 7)** autorisés à accéder aux systèmes locaux *embarqués à* tester connectés aux unités locales de connectivité et de traitement électronique **(3)** pour permettre aux testeurs de pénétration/validation **(6,** 7) d'effectuer des tests de pénétration sur les ressources informatiques **(4)** et de valider à distance la cybersécurité de ces ressources informatiques des systèmes locaux *embarqués* à tester, à la fois au moyen d'outils informatiques embarqués stockés dans les unités locales de connectivité et de traitement électronique **(3)** et au moyen d'outils informatiques propriétaires des testeurs de pénétration **(6, 7), caractérisé en ce que** la plate-forme informatique distante **(2)** est en outre conçue pour :
- permettre aux testeurs de pénétration/validation **(6, 7)** de demander l'attribution d'intervalles de temps pour l'exécution de tests de pénétration sur les ressources informatiques locales **(4)** et de valider la cybersécurité de ces ressources informatiques locales des systèmes locaux *embarqués* à tester auxquels les testeurs de pénétration/validation **(6, 7)** sont autorisés à accéder ;
- attribuer aux testeurs de pénétration/validation **(6, 7)** un ou plusieurs intervalles de temps pendant lesquels exécuter des tests de pénétration sur les ressources informatiques locales **(4)** et de valider la cybersécurité de ces ressources informatiques locales des systèmes locaux *embarqués* **(10)** à tester ; et
- établir des connexions sécurisées entre la plate-forme informatique distante **(2)** et les unités locales de connectivité et de traitement électronique **(3)** dans les intervalles de temps attribués aux testeurs de pénétration/validation **(6, 7)** pour permettre aux testeurs de pénétration/validation **(6, 7)** d'effectuer des tests de pénétration sur les ressources informatiques **(4)** et de valider à distance la cybersécurité de ces ressources informatiques des systèmes locaux *embarqués* à tester connectés aux unités locales de connectivité et de traitement électronique **(3)** connectées à la plate-forme informatique distante **(2).**

2. Système **(1)** selon la revendication **1,** les unités locales de connectivité et de traitement électronique **(3)** étant également conçues pour :
- recevoir de la plate-forme informatique distante **(2)** et stocker les intervalles de temps pendant lesquels se connecter à la plate-forme informatique distante **(2)** ; et
- se connecter de manière autonome à la plate-forme informatique distante **(2)** dans les intervalles de temps stockés.

3. Système **(1)** selon l'une quelconque des revendications précédentes, où la plate-forme informatique distante **(2)** est conçue pour gérer le multiplexage entre les testeurs de pénétration/validation **(6, 7)** et les unités locales de connectivité et de traitement électronique **(3),** afin de traiter la sécurité et la gestion des conflits de synchronisation garantissant un accès égal à tous les tests de pénétration/validation **(6, 7)** .

4. Système **(1)** selon l'une quelconque des revendications précédentes, la plate-forme informatique distante **(2)** étant également conçue pour virtualiser les systèmes locaux *embarqués* à tester afin de mettre à la disposition des testeurs de pénétration/validation **(6, 7)** les ressources informatiques **(4)** correspondantes sur lesquelles exécuter les tests de pénétration ou de validation de la cybersécurité.

5. Système **(1)** selon l'une quelconque des revendications précédentes, dans lequel la plate-forme informatique distante **(2)** est également conçue pour permettre la mise en œuvre d'une ou de plusieurs des caractéristiques suivantes :
- la surveillance de l'activité des unités locales de connectivité et de traitement électronique **(3)** et de la plate-forme informatique distante **(2) ;**
- l'enregistrement des sessions de tests de pénétration et de validation de la cybersécurité ; et
- la génération de rapports sur l'activité des unités locales de connectivité et de traitement électronique **(3) et** de la plate-forme informatique distante (**2**).

6. Système **(1)** selon l'une quelconque des revendications précédentes, les testeurs de pénétration/validation **(6, 7)** étant des utilisateurs uniques **(6)** ou des plates-formes de *prime de bogues* **(7)** auxquelles des utilisateurs uniques sont connectés (**6**).

7. Système **(1)** selon l'une quelconque des revendications précédentes, les unités locales de connectivité et de traitement électronique **(3)** étant également conçues pour permettre la mise en œuvre d'une ou de plusieurs des fonctions suivantes :
- la mise à jour d'outils informatiques embarqués si un nouveau type de vulnérabilité ou de méthodologie d'attaque est découvert ; et
- la fourniture des spécifications, des exigences et des informations sur les types de vulnérabilités.

8. Système **(1)** selon l'une quelconque des revendications précédentes, les systèmes locaux *embarqués* **(10)** à tester comprenant un système embarqué de véhicule à moteur ou un réseau de systèmes embarqués de véhicule à moteur connectés à un réseau de communication embarqué de véhicule à moteur.

9. Modules logiciels pour une plate-forme informatique distante **(2)** et unité locale de connectivité et de traitement électronique **(3)** conçus pour garantir que, lorsqu'ils sont exécutés, la plate-forme informatique distante **(2)** et l'unité locale de connectivité et de traitement électronique **(3)** coopèrent pour mettre en œuvre un système **(1)** permettant aux testeurs de pénétration/validation **(6, 7)** d'effectuer des tests de pénétration sur les ressources informatiques **(4)** et de valider la cybersécurité de ces ressources informatiques des systèmes locaux *embarqués* sans connectivité Internet à tester selon l'une quelconque des revendications précédentes.
